(19) Europäisches Patentamt / European Patent Office / Office européen des brevets

(11) **EP 2 275 991 B1**

(12) **FASCICULE DE BREVET EUROPEEN**

(45) Date de publication et mention
de la délivrance du brevet:
**05.06.2019 Bulletin 2019/23**

(51) Int Cl.:
***G06T 7/00*** *(2017.01)*

(21) Numéro de dépôt: **10167120.4**

(22) Date de dépôt: **24.06.2010**

(54) **Procédé d'analyse de marquages de roues pour véhicule automobile**

Verfahren zur Analyse der Radmarkierungen für Kraftfahrzeug

Method for analysing wheel markings for an automobile

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.06.2009 FR 0954469**

(43) Date de publication de la demande:
**19.01.2011 Bulletin 2011/03**

(73) Titulaire: **VALEO VISION**
**93012 Bobigny (FR)**

(72) Inventeurs:
• **Le Bars, Jean-François**
**89275 Elchingen (DE)**
• **Hue, David**
**78400 Chatou (FR)**

(74) Mandataire: **Claassen, Maarten Pieter et al**
**Valeo Schalter und Sensoren GmbH**
**Laiernstraße 12**
**74321 Bietigheim-Bissingen (DE)**

(56) Documents cités:
**EP-A1- 1 715 456       EP-A2- 1 962 254**
**WO-A2-2009/027089    US-A1- 2002 040 962**
**US-A1- 2006 202 808**

## Description

La présente invention concerne un procédé d'analyse d'un marquage laissé par les roues d'un véhicule automobile sur une route.

Elle concerne également un dispositif de mise en oeuvre du procédé.

Elle trouve une application particulière dans le domaine des véhicules automobiles.

WO 2009/027089 A2 divulgue un procédé d'analyse de marquages de signalisation au sol d'une chaussée. Les marquages se trouvent devant le véhicule.

Sur certains types de revêtement non absorbant en présence d'un phénomène perturbateur de roulage ou d'un phénomène perturbateur de visibilité, tel que de la pluie, les roues d'un véhicule automobile génèrent à l'arrière du véhicule une quantité considérable de turbulences dont une des conséquences est une modification des conditions de roulage et une perte de visibilité des lampes de signalisation du véhicule pour les véhicules suiveurs, ce qui entraîne des situations dangereuses.

La présente invention a pour but un procédé d'analyse d'un marquage laissé par les roues d'un véhicule automobile sur une route, qui permette de détecter la présence d'un phénomène perturbateur de visibilité ou d'un phénomène perturbateur de roulage et d'agir en conséquence.

Selon un premier objet de l'invention, ce but est atteint par un procédé conformément à la revendication 1.

Comme on va le voir en détail par la suite, la détection et l'analyse d'un contraste entre le marquage laissé par les roues du véhicule sur une route avec la route elle-même, va permettre de déterminer la présence ou l'absence d'un phénomène perturbateur de visibilité ou de roulage et d'agir en conséquence. Ce procédé peut s'appliquer à une image de l'environnement déjà acquise, par exemple au cours d'un autre procédé. Dans un tel cas, le procédé selon l'invention vient compéter un procédé déjà présent sur le véhicule, et dans lequel la ou les images sont acquises.

Selon des modes de réalisation non limitatifs, le procédé peut comporter en outre une ou plusieurs caractéristiques supplémentaires parmi les suivantes :

- Le procédé d'analyse comporte en outre une étape supplémentaire d'acquérir ladite, ou lesdites, image(s) (I) dudit environnement arrière du véhicule automobile (V) à laquelle, ou auxquelles, les étapes de définition de région d'intérêt et de détection d'au moins un contraste sont appliquées. Ainsi, l'acquisition des images peut être intégrée au procédé d'analyse et ainsi être appliquée à un véhicule ne mettant pas déjà en oeuvre une acquisition d'image.

- La détection de contraste se base sur une différence de niveaux de gris entre la région d'intérêt définie et une région adjacente. C'est un calcul simple à effectuer.

- Le procédé d'analyse comporte en outre une étape supplémentaire de détecter la présence d'un phénomène perturbateur de roulage en se basant sur une moyenne locale de contraste. C'est une solution simple à mettre en oeuvre. Préférentiellement, l'étape supplémentaire permet en outre de quantifier le phénomène perturbateur de roulage en se basant sur la moyenne locale de contraste.

- Le procédé d'analyse comporte en outre une étape supplémentaire de détecter la présence d'un phénomène perturbateur de visibilité en se basant sur une évolution du contraste, le long du marquage de la roue. C'est une solution simple à mettre en oeuvre. Avec l'évolution d'un contraste, on peut déterminer une perte de visibilité à l'arrière du véhicule. Préférentiellement, cette étape supplémentaire permet également de déterminer l'intensité du phénomène perturbateur de visibilité en se basant sur une évolution du contraste, le long du marquage de la roue.

- Deux régions d'intérêt sont définies. Cela permet de rendre plus fiable la détection d'un contraste. Car on peut ensuite recouper les informations analysées ou encore on peut choisir de rejeter une des régions d'intérêt si celle-ci se confond avec des bandes de signalisation de la route ou si elle correspond à la présence d'une modification locale du revêtement de la chaussée.

- La détection du contraste s'effectue sur une séquence d'images acquises. Cela permet d'avoir un filtrage temporel et de vérifier que la détection d'un contraste n'est pas due à un phénomène ponctuel.

- Le procédé d'analyse comporte en outre une étape supplémentaire de corréler la définition de la région d'intérêt d'observation d'un marquage de roue avec une observation des bandes de signalisation de la route. Cela permet de rejeter la région d'intérêt dans lequel une détection d'un contraste ne serait due qu'à des bandes de signalisation de la route.

- Le procédé d'analyse comporte en outre une étape supplémentaire de régler les lampes de signalisation du véhicule automobile en fonction de la présence d'un phénomène perturbateur de roulage et/ou d'un phénomène perturbateur de visibilité. Cela permet à un conducteur d'un véhicule suiveur de toujours distinguer le véhicule automobile même en cas de phénomène perturbateur de roulage ou de visibilité.

- Le procédé d'analyse comporte une étape supplémentaire d'envoyer un signal de détection d'un phénomène perturbateur de roulage et/ou d'un phénomène perturbateur de visibilité. Ce signal de détection peut être envoyé au conducteur du véhicule automobile et/ou aux autres calculateurs du véhicule et/ou aux véhicules dans la dans l'environnement proche, par exemple par l'intermédiaire de moyens de communication inter véhicules. Cela permet au conducteur du véhicule automobile de réagir et/ou aux véhicules d'optimiser leurs paramètres de sécurité en conséquence. Préférentiellement, cette étape supplémentaire comprend également l'envoi de la valeur du phénomène perturbateur de roulage et/ou d'un phénomène perturbateur de visibilité au conducteur du véhicule automobile et/ou aux autres calculateurs du véhicule et/ou aux véhicules dans l'environnement proche. Par environnement du véhicule, proche on entend des véhicule située à environ 200 mètres ou moins du véhicule où le procédé d'analyse selon l'invention est appliqué. La communication inter véhicule peut se faire par radio et/ou par satellite.

Selon un deuxième objet de l'invention, elle concerne un dispositif conformément à la revendication 12.

Selon un mode de réalisation non limitatif, le dispositif d'analyse une caméra arrière apte à acquérir au moins ladite ou lesdites image(s) dudit environnement arrière du véhicule automobile.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

L'invention et ses différentes applications seront mieux comprises à la lecture de la description qui suit et à l'examen des figures qui l'accompagnent.

L'invention a également pour objet, indépendamment ou en combinaison avec ce qui précède, un procédé d'analyse d'un marquage laissé par les roues d'un véhicule automobile (V) sur une route (R), de préférence le marquage étant fugace et laissé dans la couche d'humidité à la surface de la route par les roues du véhicule, comportant les étapes de :

- définir au moins une région d'intérêt d'observation (ROI) d'au moins un marquage (M) de roue dans au moins une image acquise (I) d'un environnement arrière du véhicule (V) ; et

détecter au moins un contraste (Ct) entre ledit marquage (M) et la route (R), cette détection de préférence ne nécessitant pas une rétrodiffusion de lumière

Celles-ci ne sont présentées qu'à titre indicatif et nullement limitatif de l'invention.

- la Fig. 1 est un organigramme d'un mode de réalisation non limitatif du procédé d'analyse selon l'invention ;
- la Fig. 2 est un organigramme du procédé d'analyse de la Fig. 1 comprenant des étapes supplémentaires selon des modes de réalisation non limitatifs ;
- la Fig. 3 représente une image acquise de l'environnement arrière d'un véhicule automobile en présence d'un phénomène perturbateur de roulage, dans lequel au moins une région d'intérêt est définie selon un premier mode de réalisation d'une étape du procédé d'analyse de la Fig. 1 ;
- la Fig. 4 représente un exemple non limitatif d'une courbe représentative de niveaux de gris dans une région d'intérêt définie dans l'image de la Fig. 3 et dans une région adjacente ;
- la Fig. 5 représente une image acquise de l'environnement arrière d'un véhicule automobile en l'absence d'un phénomène perturbateur de roulage, dans lequel au moins une région d'intérêt est définie selon un premier mode de réalisation d'une étape du procédé d'analyse de la Fig. 1 ;
- la Fig. 6 représente un exemple non limitatif d'une courbe représentative de niveaux de gris dans une région d'intérêt définie dans l'image de la Fig. 5 et dans une région adjacente ;
- la Fig. 7 représente une image acquise de l'environnement arrière d'un véhicule automobile en présence d'un phénomène perturbateur de roulage et de visibilité, dans lequel au moins une région d'intérêt est définie selon un deuxième mode de réalisation d'une étape du procédé d'analyse de la Fig. 1 ;
- la Fig. 8 représente un exemple non limitatif d'une courbe représentative d'au moins contraste entre une région d'intérêt définie dans l'image de la Fig. 7 et une région adjacente ;
- la Fig. 9 représente une image acquise de l'environnement arrière d'un véhicule automobile en l'absence d'un phénomène perturbateur de roulage et visibilité, dans lequel au moins une région d'intérêt est définie selon un deuxième mode de réalisation d'une étape du procédé d'analyse de la Fig. 1 ;
- la Fig. 10 représente un exemple non limitatif d'une courbe représentative d'au moins contraste entre une région d'intérêt définie dans l'image de la Fig. 9 et une région adjacente ; et

- la Fig. 11 est un bloc diagramme fonctionnel d'un mode de réalisation non limitatif d'une architecture d'un dispositif d'analyse de mise en oeuvre du procédé de la Fig. 1.

Dans toutes les figures, les éléments communs portent les mêmes numéros de référence.

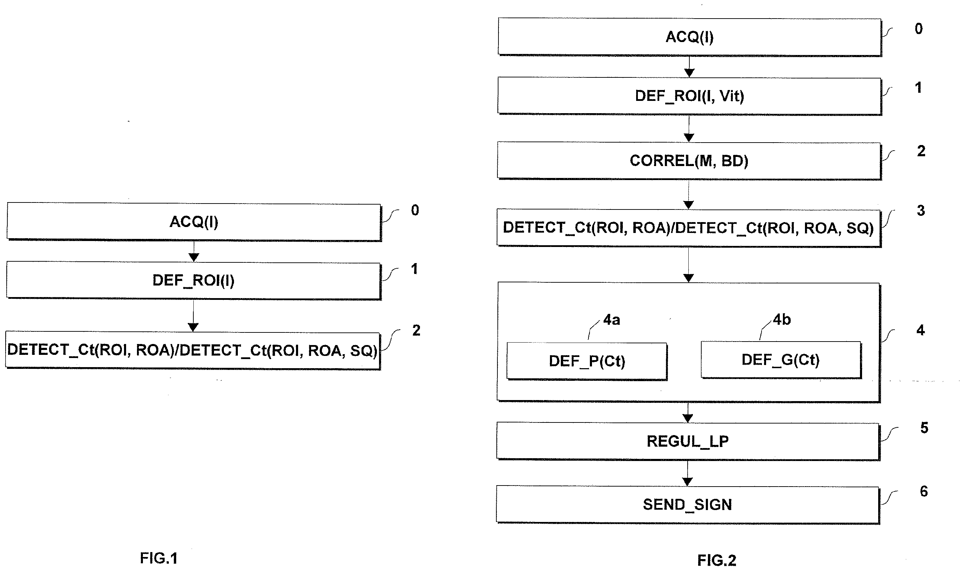

Le procédé d'analyse d'un marquage laissé par les roues d'un véhicule automobile sur une route selon l'invention est décrit dans un mode de réalisation non limitatif à la Fig. 1 et à la Fig. 2.

On notera que par véhicule automobile, on entend tout type de véhicule motorisé.

On entend par phénomène perturbateur de roulage P, tout phénomène tel que dans des exemples non limitatifs, la pluie, la neige, le sable, se trouvant sur la route, qui pourraient venir perturber le conducteur du véhicule automobile et/ou le comportement attendu du véhicule lui-même lorsqu'il roule sur ladite route (distance de freinage,...)

On entend par phénomène perturbateur de visibilité G, tout phénomène tel que dans des exemples non limitatifs, la pluie, la neige, le sable, le brouillard, qui pourraient venir perturber la visibilité du conducteur à l'arrière du véhicule automobile et également la visibilité d'un conducteur d'un véhicule suiveur par rapport à l'éclairage des lampes de signalisation du véhicule automobile considéré.

Le procédé d'analyse d'un marquage M laissé par les roues d'un véhicule automobile V sur une route R, comporte les étapes suivantes telles qu'illustrées à la Fig. 1 et à la Fig. 2:

- Définir au moins une région d'intérêt d'observation ROI d'au moins un marquage M de roue dans au moins une image acquise I d'un environnement arrière E du véhicule V (étape DEF_ROI(I)) ;
- Détecter au moins un contraste Ct entre ledit marquage M et la route R (étape DETECT_Ct(ROI, ROA) illustrée à la Fig. 1 et DETECT_Ct (ROI, ROA, SQ) illustrée à la Fig. 2); et

Selon des modes de réalisations non limitatifs, le procédé d'analyse comporte en outre les caractéristiques suivantes telles qu'illustrées à la Fig. 2.

Selon un mode de réalisation non limitatif, le procédé d'analyse comporte en outre une étape supplémentaire d'acquérir au moins une image I dudit environnement arrière du véhicule automobile V (étape ACQ(I)). On notera que cette étape peut également être effectuée en amont dudit procédé d'analyse par un autre procédé.

Selon un mode de réalisation non limitatif, deux régions d'intérêt sont définies ROI.

Selon un mode de réalisation non limitatif, le procédé d'analyse comporte en outre une étape supplémentaire de corréler la définition de la région d'intérêt d'observation ROI d'un marquage de roue M avec une observation des bandes de signalisation BD de la route R (étape CORREL(M, BD)).

Selon un mode de réalisation non limitatif, le procédé d'analyse comporte en outre une étape supplémentaire de détecter la présence d'un phénomène perturbateur de roulage P en se basant sur une moyenne locale de contraste Ct (étape DEF_P(Ct)).

Selon un mode de réalisation non limitatif, le procédé d'analyse comporte en outre une étape supplémentaire de détecter la présence d'un phénomène perturbateur de visibilité G en se basant sur une évolution du contraste Ct, le long du marquage M de la roue (étape DEF_G(Ct)).

Selon un mode de réalisation non limitatif, le procédé d'analyse comporte en outre une étape supplémentaire de régler les lampes de signalisation LP du véhicule automobile V en fonction de la présence d'un phénomène perturbateur de roulage P ou d'un phénomène perturbateur de visibilité G (étape REGUL_LP).

Selon un mode de réalisation non limitatif, le procédé d'analyse comporte en outre une étape supplémentaire d'envoyer un signal de détection d'un phénomène perturbateur de roulage P et/ou ou d'un phénomène perturbateur de visibilité G (étape SEND_SIGN) au conducteur et leur valeur estimée aux autres calculateurs du véhicule en charge de la sécurité de roulage (motorisation, freinage, ACC, ESP,...) ainsi que dans le cas de communication inter véhicules aux véhicules dans l'environnement immédiat.

Pour la suite de la description, dans le mode de réalisation non limitatif du procédé décrit, le procédé comprend ces étapes supplémentaires.

Les étapes du procédé sont décrites en détail ci-après en se référant à la Fig. 2.

**Dans une étape initiale 0),** on acquiert au moins une image I dudit environnement arrière E du véhicule automobile V. L'acquisition se fait au moyen d'une caméra arrière CAM1. Les méthodes d'acquisition d'images étant connues de l'homme du métier, elles ne sont pas décrites ici.

**Dans une première étape 1),** on définit au moins une région d'intérêt d'observation ROI d'au moins un marquage M de roue dans au moins une image acquise I d'un environnement arrière E du véhicule V.

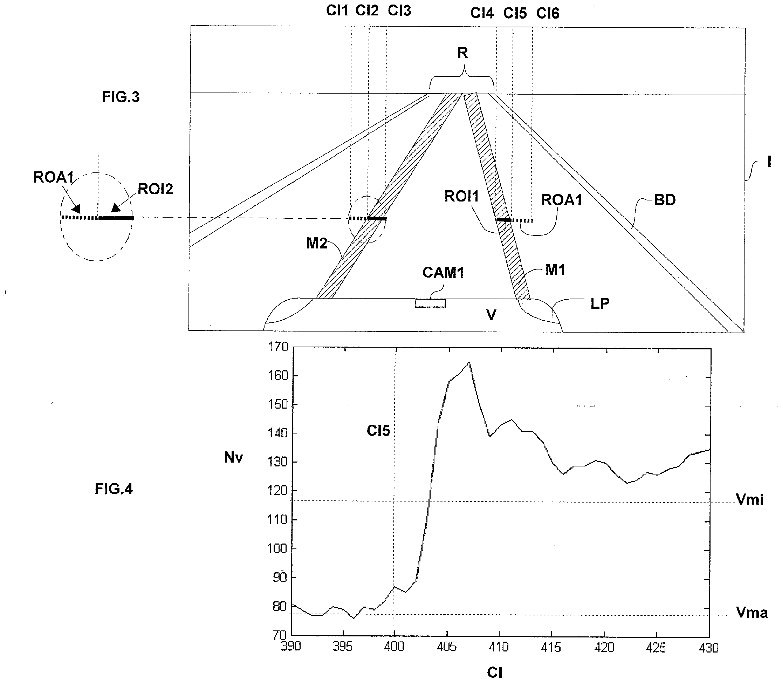

Dans un mode de réalisation non limitatif, on définit deux régions d'intérêt d'observation ROI1 et ROI2, telles qu'illustrées sur les exemples non limitatifs des Figs. 3, 5, 7 et 9. Pour la suite de la description, on considère deux régions d'intérêt d'observation ROI1, ROI2.

On notera que le fait d'utiliser deux régions d'intérêt au lieu d'une permet de rendre plus fiable la détection de contraste Ct par la suite car on peut recouper les informations analysées ou encore on peut choisir de rejeter une des régions d'intérêt ROI si celle-ci se confond avec des bandes de signalisation BD de la route. Ou à des modifications locales du revêtement de la chaussée.

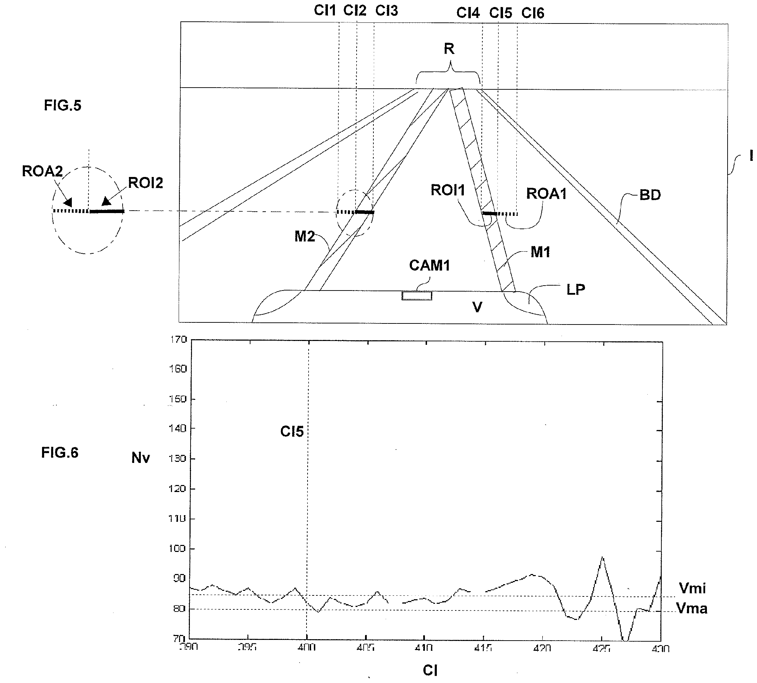

Dans un premier mode de réalisation non limitatif, tel qu'illustré sur la Fig. 3 ou la Fig. 5, la région d'intérêt d'observation définie ROI1, ROI2 comprend au moins un segment (délimité par un ensemble de colonnes respectivement Cl2-Cl3 et Cl4-Cl5) dans l'image acquise I et situé respectivement sur un marquage M1 et M2 (zone hachurée) laissé par une roue du véhicule automobile V sur la route R. Le segment s'étend sur la largeur du marquage.

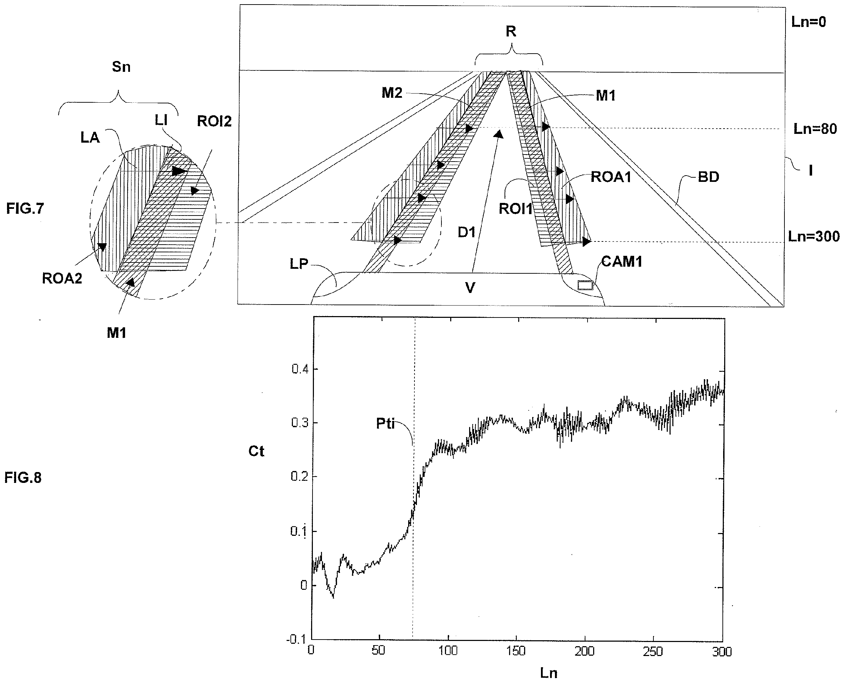

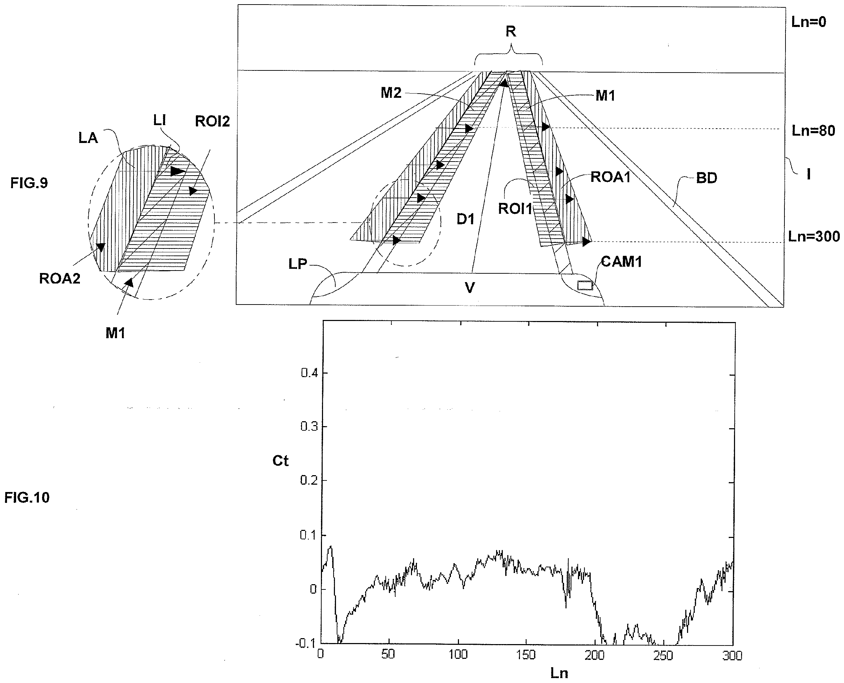

Dans un deuxième mode de réalisation, tel qu'illustré sur la Fig. 7 ou la Fig. 9, la région d'intérêt d'observation définie ROI1, ROI2 est une région s'étendant le long respectivement du marquage M1, M2 et englobant ledit marquage M1, M2.

On notera que dans un mode de réalisation non limitatif, pour déterminer l'emplacement des marquages M1, M2 laissé par les roues du véhicule automobile V, on utilise les caractéristiques géométriques (angle, orientation etc.) de la caméra CAM1 et les caractéristiques du véhicule automobile V pour déterminer le positionnement des roues (et donc des marquages) par rapport au véhicule V et à la caméra CAM1.

**Dans une deuxième étape 2),** on corrèle la définition de la région d'intérêt d'observation ROI d'un marquage de roue M avec une observation des bandes de signalisation BD de la route R.

A cet effet, dans un mode de réalisation non limitatif, on peut utiliser une détection de bandes de signalisation BD au moyen d'une caméra avant. On peut également utiliser des informations provenant d'un dispositif de navigation ou de tout autre système permettant d'obtenir des informations sur la localisation des bandes de signalisation BD.

Si le marquage M d'une roue se trouve sur une bande de signalisation BD, alors on ne prend pas en compte la définition de la région d'intérêt ROI tout le temps que le marquage M se trouve dans la bande BD. Dans ce cas, lorsque deux régions d'intérêt ROI1, ROI2 ont été définies, on prend l'autre région d'intérêt, ROI2 par exemple, qui ne se situe pas sur une bande de signalisation BD. On notera qu'il n'est possible d'avoir à la fois qu'une unique région d'intérêt, ROI1 par exemple, sur une bande de signalisation BD car la route R qui est délimitée par les bandes BD est plus large que l'écartement des roues du véhicule automobile V.

Ainsi, on évite de prendre en compte une courbe de niveaux de gris Nv qui serait dû à une bande de signalisation BD et donc de calculer un contraste qui serait dû à cette bande BD, comme on va le voir ci-après.

**Dans une troisième étape 3),** on détecte au moins un contraste Ct entre ledit marquage M et la route R.

Dans un mode de réalisation non limitatif, la détection de contraste Ct se base sur une différence de niveaux de gris Nv entre la région d'intérêt définie ROI et une région adjacente ROA.

Première variante de réalisation

Dans une première variante de réalisation non limitative, au moins une moyenne locale de niveaux de gris Nv est calculée.

Ainsi, tel qu'illustré sur la Fig. 3 ou la Fig. 5, une région adjacente ROA1, ROA2 comprend au moins un segment (délimité par un ensemble de colonnes respectivement Cl1-Cl2 et Cl5-Cl6) dans l'image acquise I, le segment étant situé respectivement en dehors d'un marquage M1, M2 du véhicule automobile V et étant adjacent (à la frontière Cl2 et Cl5) respectivement aux segments des régions d'intérêt ROI1, ROI2 déterminées précédemment selon le premier mode de réalisation.

Pour chaque région d'intérêt ROI1, ROI2 et chaque région adjacente associée ROA1, ROA2, c'est-à-dire ici pour chaque segment correspondant aux régions ROI1, ROA1 et ROI2, ROA2, on détermine le niveau de gris associé Nv. Ainsi, la Fig. 4 illustre une courbe représentative pour un couple de segments :

- des niveaux de gris Nv d'un segment de la région d'intérêt ROI1 (colonnes Cl4 à Cl5) dans une image acquise I ; et
- des niveaux de gris Nv d'un segment de la région adjacente ROA1 (colonnes Cl5 à Cl6) dans une image acquise I, les deux segments appartenant à une même ligne dans l'image I.

Dans l'exemple non limitatif illustré, les colonnes Cl4 à Cl5 ont pour valeur les pixels 390 à 400, et les colonnes Cl5 à Cl6 ont pour valeur les pixels 400 à 430, sur une résolution de 640X480 pixels dans l'exemple tel qu'illustré sur la Fig. 4.

Il en est de même à la Fig. 6.

Puis, dans un premier exemple non limitatif, on détermine la moyenne de niveaux de gris Nv, Vma et Vmi respectivement pour les régions adjacentes ROA et pour les régions d'intérêt ROI et on calcule le contraste Ct comme étant par exemple Ct = (Vma-Vmi)/Vma.

Comme on peut le voir à la Fig. 4, la valeur moyenne Vmi de la région d'intérêt ROI1 est nettement inférieure à la valeur moyenne Vma de la région adjacente ROA1. Le contraste Ct est important.

Par contre, comme on peut le voir à la Fig. 6, la valeur moyenne Vmi de la région d'intérêt ROI1 est presque égale à la valeur moyenne Vma de la région adjacente ROA1. Le contraste Ct est quasi nul.

Dans un deuxième exemple non limitatif, on utilise plusieurs segments, appartenant à différentes lignes, pour la région d'intérêt ROI1 et pour la région adjacente correspondante ROA1, par exemple trois segments pour chacune des régions ROI1 et ROA1.

Pour chaque segment d'une région d'intérêt ROI1 et d'une région adjacente associée ROA1 appartenant à une même ligne (couple de segments), on obtient une courbe telle qu'illustrée à la Fig. 4 ou à la Fig. 6. On calcule alors la moyenne de niveaux de gris Vmi, Vma pour chaque segment.

Puis on calcule la moyenne mVmi des moyennes Vmi des trois segments de la région d'intérêt ROI1 et la moyenne mVma des moyennes Vma des trois segments de la région adjacente ROA1.

On obtient le contraste Ct =(mVma - mVmi)/mVma.

Dans un troisième exemple non limitatif, on peut calculer le contraste Ct pour chaque couple de segments d'une région d'intérêt ROI1 et de sa région adjacente ROA1 et faire une moyenne des trois contrastes Ct obtenus.

Dans les trois exemples non limitatifs, on obtient ainsi une moyenne locale de contraste Ct.

Deuxième variante de réalisation

Dans une deuxième variante de réalisation non limitative, une évolution, le long du marquage M de la roue, de moyennes de niveaux de gris entre la région d'intérêt définie ROI une région adjacente ROA est calculée. Cette évolution représente une évolution de contraste Ct.

Ainsi, tel qu'illustré sur la Fig. 7 ou la Fig. 9, une région adjacente ROA1, ROA2 est définie comme étant une région s'étendant le long d'un marquage, ici respectivement M1, M2 et n'englobant pas ledit marquage M1, M2, mais étant adjacente respectivement aux régions d'intérêt ROI1, ROI2 définie précédemment selon le deuxième mode de réalisation.

Dans un exemple non limitatif, pour chaque région d'intérêt ROI1, ROI2 et chaque région adjacente associée ROA1, ROA2 :

- on détermine, tel qu'illustré sur la Fig. 7 ou la Fig. 9, une pluralité de segments Sn de ligne Ln (représentés de manière schématique par des flèches horizontales) dans l'image I passant par ces régions ROA1, ROI1 et ROA2, ROI2. Les segments Sn déterminés sont situés le long du marquage M1, M2 ; et
- on calcule le niveau de gris associé Nv à chacun des segments Sn de ligne Ln.

Dans un exemple non limitatif, on détermine alors le contraste Ct de la manière suivante.

$$Ct= (LA-LI)/LA \text{ pour chaque segment } Sn,$$

pour chaque segment Sn,

avec LI, la moyenne de niveaux de gris de la partie du segment Sn appartenant à la région d'intérêt ROI et égale à la largeur du marquage M de la roue, et

LA, l'autre moyenne de niveaux de gris de la partie du même segment Sn appartenant à la région d'intérêt correspondante ROA.

On remarquera que plus on s'approche de la ligne Ln = 0 (donc plus on s'éloigne du véhicule V), plus les parties LA, et LI sont petites.

On notera que l'on pourrait également calculer le contraste Ct en effectuant le calcul suivant :

$$Ct= (LA-LI)/(LA+LI)$$

Ainsi, la Fig. 8 illustre une courbe représentative de l'évolution du contraste Ct le long d'un marquage M1 de route par rapport aux numéros de lignes Ln dans l'image I, lignes Ln dans lesquelles des segments Sn sont déterminés. Dans l'exemple non limitatif illustré sur la courbe, les valeurs des lignes numéro 0 à 300 sont représentées. Il en est de même à la Fig. 10.

Comme on peut le voir à la Fig. 8, la courbe présente un point d'inflexion Pti à la hauteur de la ligne Ln = 80. Cela montre le début de la perte de contraste Ct. Par ailleurs, on peut voir que le contraste Ct est important.

Par contre, comme on peut le voir à la Fig. 10, la courbe ne présente aucun point d'inflexion Pti. On peut voir que le contraste Ct est quasi nul.

Dans un mode de réalisation non limitatif, la détection de contraste décrite ci-dessus (que ce soit selon la première variante de réalisation ou selon la deuxième variante de réalisation), peut être effectuée sur une séquence SQ d'images acquises I. Cela permet de faire un suivi de contraste Ct.

**Dans une quatrième étape 4),** on détecte la présence d'un phénomène perturbateur de roulage P en se basant sur la moyenne locale de contraste Ct calculée précédemment (étape 4a) DEF_P(Ct)), et/ou on détecte la présence d'un phénomène perturbateur de visibilité G en se basant sur l'évolution du contraste Ct, le long du marquage M de la roue déterminée précédemment (étape 4b) DEF_G(Ct)).

Ainsi, dans le premier mode de réalisation où la détection se base sur une moyenne locale, on peut voir que dans le premier exemple illustré sur la Fig. 3 et la Fig. 4, il y a un contraste Ct important entre un marquage M laissé par les roues du véhicule automobile V et la route R, la moyenne locale étant importante, ici d'environ 40.

On en déduit donc la présence d'un phénomène perturbateur de roulage P car la moyenne locale dépasse un premier seuil S1. Dans un exemple non limitatif, on a S1 = 20.

Par contre, dans le deuxième exemple illustré sur la Fig. 5 et la Fig. 6, il n'y pratiquement pas de contraste Ct entre un marquage M laissé par les roues du véhicule automobile V et la route R, la moyenne locale étant très faible. On en déduit donc qu'il n'existe aucun phénomène perturbateur de roulage P.

Dans le deuxième mode de réalisation où la détection se base sur une évolution du contraste Ct, le long du marquage de la roue, on peut voir que dans le premier exemple illustré sur la Fig. 7 et la Fig. 8, il y a une évolution du contraste Ct importante (il augmente).

On en déduit donc qu'il existe un phénomène perturbateur de visibilité G car l'évolution du contraste Ct présente un point d'inflexion Pti correspondant à une distance de visibilité D1 inférieure à un deuxième seuil S2. Ce deuxième seuil S2 est représentatif d'une distance de visibilité en l'absence de phénomène perturbateur de visibilité G. Cette distance D1 montre à quelle distance se trouve un phénomène perturbateur de visibilité G s'il en existe un.

Dans l'exemple pris, le contraste Ct augmente à partir de la ligne Ln = 80 qui représente une certaine distance de visibilité D1. On compare cette distance de visibilité D1 avec le deuxième seuil S2. Si D1<S2, alors on en déduit la présence du phénomène perturbateur de visibilité G.

Par contre, dans le deuxième exemple illustré sur la Fig. 9 et la Fig. 10, le contraste Ct n'évolue presque pas et est quasi nul. Comme il n'y a pas de point d'inflexion Pti, on en déduit que la distance de visibilité D1 est à l'infini et est donc supérieur au deuxième seuil S2.

On en déduit donc qu'il n'existe aucun phénomène perturbateur de visibilité G.

**Dans une cinquième étape 5),** on règle les lampes de signalisation LP du véhicule automobile V en fonction de la présence d'un phénomène perturbateur de roulage P et/ou de la présence d'un phénomène perturbateur de visibilité G. Cela permet à un conducteur d'un véhicule suiveur de mieux voir le véhicule automobile V.

**Dans une sixième étape 6),** on envoie un signal de détection d'un phénomène perturbateur de roulage P et/ou d'un phénomène perturbateur de visibilité G.

Ce signal est envoyé au conducteur du véhicule automobile V afin qu'il puisse prendre les actions nécessaires, telles qu'un freinage manuel dans un exemple non limitatif, et/ou sa valeur est envoyée aux autres calculateurs du véhicule qui agissent sur les paramètres de sécurité du roulage (motorisation, freinage, ACC, ESP,...) et, dans le cas de communication inter véhicules, aux véhicules dans l'environnement proche à titre de prévention.

Ainsi, le procédé décrit permet notamment d'éviter des situations dangereuses du fait de phénomène perturbateur de roulage ou de visibilité sur la route qui entraînerait une perte de visibilité à l'arrière du véhicule.

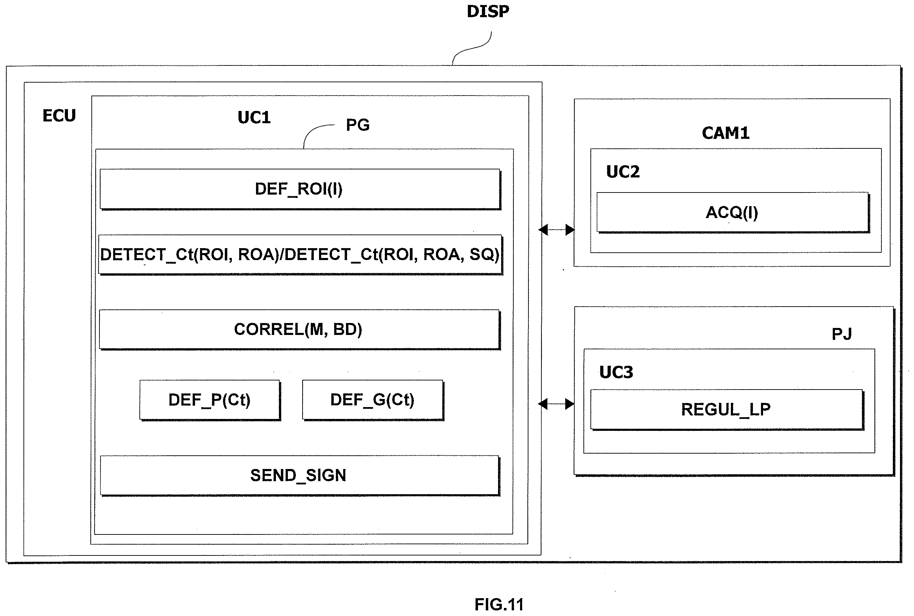

Le procédé de l'invention est mis en oeuvre par un dispositif DISP d'analyse d'un marquage laissé par les roues d'un véhicule automobile V sur une route R (représenté à la Fig.11 dans un mode de réalisation non limitatif).

Ce dispositif DISP est intégré dans le véhicule automobile V.

Dans un mode de réalisation non limitatif, ledit dispositif DISP est apte à :

- définir au moins une région d'intérêt d'observation ROI d'au moins un marquage M de roue dans au moins une image acquise I d'un environnement arrière E du véhicule V ; et
- détecter au moins un contraste Ct entre ledit marquage M et la route R.

Dans un mode de réalisation non limitatif, il comporte en outre une caméra arrière CAM1 apte à acquérir au moins une image I dudit environnement arrière du véhicule automobile V. C'est dans cette image que le dispositif procédera à la définition d'au moins une région d'intérêt ROI et à la détection d'au moins un contraste Ct.

Dans un mode de réalisation non limitatif, il comporte en outre un ensemble d'unités de contrôle UCS comprenant au moins une unité de contrôle apte à effectuer les fonctions décrites ci-dessus.

Dans une première variante de réalisation, ledit ensemble UCS comporte une unique unité de contrôle UC.

Dans une deuxième variante de réalisation, ledit ensemble UCS comporte une pluralité d'unités de contrôle UC. Ainsi, les unités de contrôle UC peuvent être réparties dans la caméra CAM, dans les lampes de signalisation LP, dans un calculateur de contrôle de fonctions d'éclairage du véhicule ou encore dans un calculateur véhicule ECU.

Ainsi, dans un mode de réalisation non limitatif de cette deuxième variante, tel qu'illustré à la Fig. 11, ledit ensemble d'unités de contrôle UCS comprend :

- Une première unité de contrôle UC1 dans le calculateur ECU du véhicule apte à :

  - définir au moins une région d'intérêt d'observation ROI d'au moins un marquage M de roue dans au moins une image acquise I d'un environnement arrière E du véhicule V ; et
  - détecter au moins un contraste Ct entre ledit marquage M et la route R.

- Une deuxième unité de contrôle UC2 apte à :

  - Acquérir la ou les image(s) I de l'environnement arrière E du véhicule automobile V ;

- Une troisième unité de contrôle UC3 apte à :

  - régler les lampes de signalisation LP du véhicule automobile V en fonction de la présence du phénomène perturbateur de visibilité P.

Alternativement, bien entendu, il est également possible de regrouper la troisième unité de contrôle UC3 avec la première unité de contrôle UC1.

Dans un mode de réalisation non limitatif, le dispositif DISP est en outre apte à :

- Corréler la définition de la région d'intérêt d'observation ROI d'un marquage de roue M avec une observation des bandes de signalisation BD de la route R ;

- Détecter la présence d'un phénomène perturbateur de roulage P en se basant sur une moyenne locale de contraste Ct ;

- Détecter la présence d'un phénomène perturbateur de visibilité G en se basant sur une évolution du contraste Ct, le long du marquage M de la roue ; et

- Envoyer un signal de détection d'un phénomène perturbateur de roulage P ou d'un phénomène perturbateur de visibilité.

Ainsi, dans l'exemple de la Fig. 11, la première unité de contrôle UC1 est apte à effectuer ses fonctions supplémentaires.

Dans un mode de réalisation non limitatif, la caméra CAM1 est de type VGA ou WVGA (Wide-VGA) et permet d'acquérir des images de taille respective de 640*480 pixels ou 852*480 pixels. Bien entendu, d'autres types de caméras avec d'autres caractéristiques peuvent être utilisés.

On notera que la mise en oeuvre du procédé d'analyse exposé ci-dessus peut être effectuée au moyen d'un dispositif micro programmé « software », d'une logique câblée et/ou de composants électroniques « hardware ». Ainsi, le dispositif d'analyse DISP peut comporter un ou plusieurs produits programmes d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 11, le programme d'ordinateur PG est inscrit dans une mémoire de l'unité de contrôle UC1 du dispositif DISP.

Bien entendu, l'invention n'est pas limitée aux modes de réalisation et exemples décrits ci-dessus.

Ainsi, l'invention présente les avantages suivants :

- Elle est simple à mettre en oeuvre ;
- Elle permet de détecter un phénomène perturbateur de roulage ou un phénomène perturbateur de visibilité et d'agir en conséquence (en envoyant un signal au conducteur du véhicule automobile V afin qu'il puisse prendre les actions nécessaires telle qu'un freinage manuel dans un exemple non limitatif, et/ou la valeur représentative de l'intensité du phénomène est envoyée aux autres calculateurs du véhicule qui agissent sur les paramètres de sécurité du roulage (ajustant les lampes de signalisation, motorisation, freinage, ACC, ESP,...) et, dans le cas de communication inter véhicules, aux véhicules dans l'environnement immédiat à titre de prévention ;

- Elle permet d'utiliser une caméra déjà couramment installée dans les véhicules automobiles ;
- Elle peut également être appliquée sur des revêtements routiers absorbants, pour détecter certains phénomènes perturbateurs de roulement, sans pour autant avoir une perturbation de la visibilité. Par exemple en cas de pluie, une pellicule d'eau sera présente sur la route. Les roues ne soulèveront que peu d'écume. Un système basé sur la détection d'écume ne permettrait pas de détecter le phénomène perturbateur de roulement. En revanche, grâce à la présente invention, la détection de contraste au niveau de marquage sur la route permettra de détecter le phénomène perturbateur de roulement, la pluie dans cet exemple.

**Revendications**

1. Procédé d'analyse d'un marquage laissé par les roues d'un véhicule motorisé (V) sur une route (R) dans une couche d'humidité à la surface de ladite route (R), comportant les étapes de :

    - définir au moins une région d'intérêt d'observation (ROI) d'au moins un marquage (M) de roue dans au moins une image acquise (I) d'un environnement arrière dudit véhicule (V) ; et
    - détecter au moins un contraste (Ct) entre ledit marquage (M) et ladite route (R).

2. Procédé d'analyse selon la revendication 1, **caractérisé par le fait qu'**il comporte en outre une étape supplémentaire d'acquérir ladite, ou lesdites, image(s) (I) dudit environnement arrière dudit véhicule (V) à laquelle, ou auxquelles, les étapes de définition de régions d'intérêt et de détection d'au moins un contraste sont appliquées.

3. Procédé d'analyse selon la revendication 1 ou 2, **caractérisé par le fait que** la détection de contraste (Ct) se base sur une différence de niveaux de gris entre la région d'intérêt définie (ROI) et une région adjacente (ROA).

4. Procédé d'analyse selon l'une quelconque des revendications précédentes, **caractérisé par le fait qu'**il comporte en outre une étape supplémentaire de détecter la présence d'un phénomène perturbateur de roulage (P), par exemple la pluie, en se basant sur une moyenne locale de contraste (Ct).

5. Procédé d'analyse selon l'une quelconque des revendications précédentes, **caractérisé par le fait qu'**il comporte en outre une étape supplémentaire de détecter la présence d'un phénomène perturbateur de visibilité (G) en se basant sur une évolution du contraste (Ct), le long du marquage (M) de la roue.

6. Procédé d'analyse selon l'une quelconque des revendications précédentes, **caractérisé par le fait que** deux régions d'intérêt sont définies (ROI).

7. Procédé d'analyse selon l'une quelconque des revendications précédentes, **caractérisé par le fait que** la détection du contraste (Ct) s'effectue sur une séquence (SQ) d'images acquises (I).

8. Procédé d'analyse selon l'une quelconque des revendications précédentes, **caractérisé par le fait qu'**il comporte en outre une étape supplémentaire de corréler la définition de la région d'intérêt d'observation (ROI) d'un marquage de roue (M) avec une observation des bandes de signalisation (BD) de la route (R).

9. Procédé d'analyse selon l'une quelconque des revendications précédentes, **caractérisé par le fait qu'**il comporte en outre une étape supplémentaire de régler les lampes de signalisation (LP) dudit véhicule (V) en fonction de la présence d'un phénomène perturbateur de roulage (P) et/ou d'un phénomène perturbateur de visibilité (G).

10. Procédé d'analyse selon l'une quelconque des revendications précédentes, **caractérisé par le fait qu'**il comporte en outre une étape supplémentaire d'envoyer un signal de détection d'un phénomène perturbateur de roulage (P) et/ou d'un phénomène perturbateur de visibilité (G) au conducteur dudit véhicule (V) et/ou aux autres calculateurs du véhicule et/ou aux véhicules dans l'environnement proche.

11. Procédé d'analyse selon la revendication précédente, **caractérisé par le fait qu'**il comporte cette étape supplémentaire comprend également l'envoi de la valeur du phénomène perturbateur de roulage (P) et/ou d'un phénomène perturbateur de visibilité (G) et/ou au conducteur dudit véhicule (V) et/ou aux autres calculateurs dudit véhicule (V) et/ou aux véhicules dans l'environnement proche.

12. Dispositif (DISP) d'analyse d'un marquage laissé par les roues d'un véhicule motorisé (V) sur une route (R) dans une couche d'humidité à la surface de ladite route (R), apte à :

- définir au moins une région d'intérêt d'observation (ROI) d'au moins un marquage de roue dans au moins une image acquise (I) d'un environnement arrière dudit véhicule (V) ; et
- détecter au moins un contraste (Ct) entre ledit marquage et ladite route (R).

13. Dispositif (DISP) selon la revendication précédente, **caractérisé par le fait qu'**il comporte une caméra arrière (CAM1) apte à acquérir ladite ou lesdites image(s) dudit environnement arrière dudit véhicule (V).

14. Produit programme d'ordinateur (PG) comportant une ou plusieurs séquences d'instructions exécutables par une unité de traitement d'information, l'exécution desdites séquences d'instructions permettant une mise en oeuvre du procédé selon l'une quelconque des revendications précédentes 1 à 11.

**Patentansprüche**

1. Verfahren zur Analyse einer von den Rädern eines Kraftfahrzeugs (V) auf einer Straße (R) in einer Feuchtigkeitsschicht an der Oberfläche der Straße (R) hinterlassenen Spur, das die folgenden Schritte aufweist:

- Definieren mindestens eines interessierenden Beobachtungsbereichs (ROI) mindestens einer Radspur (M) in mindestens einem erfassten Bild (I) einer heckseitigen Umgebung des Fahrzeugs (V); und
- Erkennen mindestens eines Kontrasts (Ct) zwischen der Spur (M) und der Straße (R).

2. Analyseverfahren nach Anspruch 1, **dadurch gekennzeichnet, dass** es außerdem einen zusätzlichen Schritt der Erfassung des Bilds oder der Bilder (I) der heckseitigen Umgebung des Fahrzeugs (V) aufweist, auf das oder die die Schritte der Definition von interessierenden Bereichen und der Erkennung mindestens eines Kontrasts angewendet werden.

3. Analyseverfahren nach Anspruch 1 oder 2, **dadurch gekennzeichnet, dass** die Kontrasterkennung (Ct) auf einer Differenz von Graupegeln zwischen dem definierten interessierenden Bereich (ROI) und einem angrenzenden Bereich (ROA) basiert.

4. Analyseverfahren nach einem der vorhergehenden Ansprüche, **dadurch gekennzeichnet, dass** es außerdem einen zusätzlichen Schritt des Erkennens des Vorhandenseins eines Fahrt-Störphänomens (P), zum Beispiel Regen, auf der Grundlage eines lokalen Kontrastmittelwerts (Ct) aufweist.

5. Analyseverfahren nach einem der vorhergehenden Ansprüche, **dadurch gekennzeichnet, dass** es außerdem einen zusätzlichen Schritt des Erkennens des Vorhandenseins eines Sicht-Störphänomens (G) auf der Grundlage einer Entwicklung des Kontrasts (Ct) entlang der Spur (M) des Rads aufweist.

6. Analyseverfahren nach einem der vorhergehenden Ansprüche, **dadurch gekennzeichnet, dass** zwei interessierende Bereiche definiert werden (ROI).

7. Analyseverfahren nach einem der vorhergehenden Ansprüche, **dadurch gekennzeichnet, dass** die Erkennung des Kontrasts (Ct) an einer Folge (SQ) von erfassten Bildern (I) erfolgt.

8. Analyseverfahren nach einem der vorhergehenden Ansprüche, **dadurch gekennzeichnet, dass** es außerdem einen zusätzlichen Schritt der Korrelation der Definition des interessierenden Beobachtungsbereichs (ROI) einer Radspur (M) mit einer Beobachtung der Markierungsstreifen (BD) der Straße (R) aufweist.

9. Analyseverfahren nach einem der vorhergehenden Ansprüche, **dadurch gekennzeichnet, dass** es außerdem einen zusätzlichen Schritt des Einstellens der Signalleuchten (LP) des Fahrzeugs (V) abhängig vom Vorhandensein eines Fahrt-Störphänomens (P) und/oder eines Sicht-Störphänomens (G) aufweist.

10. Analyseverfahren nach einem der vorhergehenden Ansprüche, **dadurch gekennzeichnet, dass** es außerdem einen zusätzlichen Schritt des Sendens eines Erkennungssignals eines Fahrt-Störphänomens und/oder eines Sicht-Störphänomens (G) an den Fahrer des Fahrzeugs (V) und/oder an die anderen Rechner des Fahrzeugs (V) und/oder an die Fahrzeuge in der nahen Umgebung enthält.

11. Analyseverfahren nach dem vorhergehenden Anspruch, **dadurch gekennzeichnet, dass** es umfasst dieser zusätzliche Schritt ebenfalls das Senden des Werts des Fahrt-Störphänomens (P) und/oder des Sicht-Störphänomens (G) und/oder an den Fahrer des Fahrzeugs (V) und/oder an die anderen Rechner des Fahrzeugs (V) und/oder an die Fahrzeuge in der nahen Umgebung enthält.

12. Vorrichtung (DISP) zur Analyse einer von den Rädern eines Kraftfahrzeugs (V) auf einer Straße (R) in einer Feuchtigkeitsschicht an der Oberfläche der Straße (R) hinterlassenen Spur, die fähig ist:

- mindestens einen interessierenden Beobachtungsbereich (ROI) mindestens einer Radspur in mindestens einem erfassten Bild (I) einer heckseitigen Umgebung des Fahrzeugs (V) zu definieren; und
- mindestens einen Kontrast (Ct) zwischen der Spur und der Straße (R) zu erkennen.

13. Vorrichtung (DISP) nach dem vorhergehenden Anspruch, **dadurch gekennzeichnet, dass** sie eine heckseitige Kamera (CAM1) aufweist, die das Bild oder die Bilder der heckseitigen Umgebung des Fahrzeugs (V) erfassen kann.

14. Computerprogrammprodukt (PG), das eine oder mehrere Folgen von Anweisungen aufweist, die von einer Datenverarbeitungseinheit ausführbar sind, wobei die Ausführung der Anweisungsfolgen eine Durchführung des Verfahrens nach einem der vorhergehenden Ansprüche 1 bis 11 erlaubt.

## Claims

1. Method for analysing a mark left by the wheels of a motorized vehicle (V) on a road (R) in a layer of moisture on the surface of said road (R), comprising the steps of:

- defining at least one region of observational interest (ROI) of at least one wheel mark (M) in at least one acquired image (I) of a rear environment of said vehicle (V); and
- detecting at least one contrast (Ct) between said mark (M) and said road (R).

2. Analysis method according to Claim 1, **characterized in that** it further comprises a supplementary step of acquiring said one or more image (s) (I) of said rear environment of said vehicle (V) to which one or more image(s) the steps of definition of regions of interest and of detection of at least one contrast are applied.

3. Analysis method according to Claim 1 or 2, **characterized in that** the detection of contrast (Ct) is based on a difference in grey level between the defined region of interest (ROI) and an adjacent region (ROA).

4. Analysis method according to any one of the preceding claims, **characterized in that** it further comprises a supplementary step of detecting the presence of a travel disruption phenomenon (P), for example rain, based on a local average of contrast (Ct).

5. Analysis method according to any one of the preceding claims, **characterized in that** it further comprises a supplementary step of detecting the presence of a visibility disruption phenomenon (G) based on an evolution of the contrast (Ct) along the mark (M) of the wheel.

6. Analysis method according to any one of the preceding claims, **characterized in that** two regions of interest (ROI) are defined.

7. Analysis method according to any one of the preceding claims, **characterized in that** the detection of the contrast (Ct) is effected over a sequence (SQ) of acquired images (I).

8. Analysis method according to any one of the preceding claims, **characterized in that** it further comprises a supplementary step of correlating the definition of the region of observational interest (ROI) of a wheel mark (M) with an observation of the signalling bands (BD) of the road (R).

9. Analysis method according to any one of the preceding claims, **characterized in that** it further comprises a supplementary step of adjusting the signalling lights (LP) of said vehicle (V) as a function of the presence of a travel disruption phenomenon (P) and/or a visibility disruption phenomenon (G).

10. Analysis method according to any one of the preceding claims, **characterized in that** it further comprises a supplementary step of sending a signal of detection of a travel disruption phenomenon (P) and/or a visibility disruption phenomenon (G) to the driver of said vehicle (V) and/or to the other computers of the vehicle and/or to the vehicles in the near environment.

11. Analysis method according to the preceding claim, **characterized in that** it comprises this supplementary step also comprises sending the value of the travel disruption phenomenon (P) and/or a visibility disruption phenomenon (G) and/or to the driver of said vehicle (V) and/or to the other computers of said vehicle (V) and/or to the vehicles in the near environment.

12. Device (DISP) for analysing a mark left by the wheels of a motorized vehicle (V) on a road (R) in a layer of moisture on the surface of said road (R), which is capable of:

- defining at least one region of observational interest (ROI) of at least one wheel mark in at least one acquired image (I) of a rear environment of said vehicle (V); and
- detecting at least one contrast (Ct) between said mark and said road (R).

13. Device (DISP) according to the preceding claim, **characterized in that** it comprises a rear camera (CAM1) capable of acquiring said one or more image(s) of said rear environment of said vehicle (V).

14. Computer program product (PG) comprising one or more sequences of instructions that can be executed by an information processing unit, the execution of said instruction sequences allowing implementation of the method according to any one of the preceding Claims 1 to 11.

EP 2 275 991 B1

ACQ(I) — 0

DEF_ROI(I) — 1

DETECT_Ct(ROI, ROA)/DETECT_Ct(ROI, ROA, SQ) — 2

**FIG.1**

ACQ(I) — 0

DEF_ROI(I, Vit) — 1

CORREL(M, BD) — 2

DETECT_Ct(ROI, ROA)/DETECT_Ct(ROI, ROA, SQ) — 3

4a DEF_P(Ct)    4b DEF_G(Ct) — 4

REGUL_LP — 5

SEND_SIGN — 6

**FIG.2**

13

FIG.3

FIG.4

FIG.5

FIG.6

FIG.7

FIG.8

FIG.9

FIG.10

FIG.11

**EP 2 275 991 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009027089 A2